Europäisches Patentamt

European Patent Office

Office européen des brevets

(19)

(11) Veröffentlichungsnummer: **0 050 091**
A1

(12) **EUROPÄISCHE PATENTANMELDUNG**

(21) Anmeldenummer: 81730099.9

(22) Anmeldetag: 23.09.81

(51) Int. Cl.³: **H 02 K 3/00**
**H 02 K 11/00, H 01 F 27/40**
**H 02 H 9/06**

(30) Priorität: 09.10.80 DE 3038429

(43) Veröffentlichungstag der Anmeldung:
21.04.82 Patentblatt 82/16

(84) Benannte Vertragsstaaten:
AT CH FR GB IT LI SE

(71) Anmelder: SIEMENS AKTIENGESELLSCHAFT Berlin
und München
Postfach 22 02 61
D-8000 München 22(DE)

(72) Erfinder: Meyer, Hartmut, Dr.-Ing.
Eichenallee 13
D-1000 Berlin 19(DE)

(54) Wicklung für elektrische Maschinen oder Apparate.

(57) Die Wicklungen von elektrischen Maschinen und Apparaten sind oft aus Spulen (1) aufgebaut. Um einen Schutz gegen Stoßspannungen zu erhalten, sind die Windungen (4) zumindest einer, jeweils am Wicklungsanfang liegenden Spule (1) spannungsabhängige Widerstände (7) parallel geschaltet. Dazu dienen Metalloxidwiderstände, vorzugsweise Zinkoxidwiderstände. Diese können auch innerhalb der Hauptisolierung (5) der Spule (1) angeordnet sein.

FIG 1

EP 0 050 091 A1

Croydon Printing Company Ltd.

SIEMENS AKTIENGESELLSCHAFT
Berlin und München

Unser Zeichen
VPA 80 P 3786 E

— 7 —

Wicklung für elektrische Maschinen oder Apparate

Die Erfindung bezieht sich auf eine Wicklung für elektrische Maschinen oder Apparate, die mehrere Spulen aus konzentrischen, gegeneinander isolierten Windungen eines elektrischen Leiters enthält. Derartige aus Spulen gebildete Wicklungen sind bekannt. Es ist weiterhin bekannt und in dem Buch "Elektrische Wanderwellen auf Leitungen und in Wicklungen von Starkstromanlagen" von Reinhold Rüdenberg, Springer-Verlag 1962, auf den Seiten 131 bis 136 und auf Seite 238 beschrieben, daß während des Betriebes der elektrischen Maschinen und Apparate, wie z. B. Transformatoren, Stoßspannungen auftreten können ,die eine erhöhte elektrische Beanspruchung für die Spulen der Wicklung bedeuten, da die Überspannungswelle in die Wicklung hineinfließt und die Isolation zwischen den Windungen der Spule beansprucht. Die bekannte kapazitive Anfangsverteilung der von den Klemmen in die Wicklung eindringenden steilen Stoßspannungen läßt im übrigen insbesondere an den im Zuge der Wicklung ersten, klemmennahen Spulen die höchsten Teilspannungen entstehen.

Um zumindest die Eingangsspulen der Wicklung gegen die möglichen Überspannungen zu schützen, ist es bekannt, diese Eingangsspulen mit verstärkter Windungsisolierung zu versehen oder eine äußere Beschaltung der Maschinenklemmen mit Überspannungsableitern und Kondensatoren vorzunehmen, durch welche die in die Wicklung eintretende Überspannung abgeflacht werden soll. Die Verstärkung der Windungsisolierung einzelner Spulen am Wicklungsanfang steht einer rationellen Spulenfertigung entgegen und wird deshalb nur selten ausgeführt. Die Elemente der äußeren Beschaltung zur Begrenzung der Überspannungsamplitude und zur Verringerung der Steilheit der Stoßspannungen sind dagegen sehr aufwendig, da sie für die volle elektrische Betriebsbeanspruchung an den Maschinenklemmen bemessen werden müssen.

Der vorliegenden Erfindung liegt die Aufgabe zugrunde, eine andere, weniger aufwendige Methode zum Schutz der Spulen von Wicklungen elektrischer Maschinen oder Apparate der eingangs beschriebenen Art gegen Beanspruchungen durch steile Stoß- und Schaltspannungen zu schaffen.

Zur Lösung dieser Aufgabe sind bei einer Wicklung für elektrische Maschinen oder Apparate, die mehrere Spulen aus konzentrischen, gegeneinander isolierten Windungen eines elektrischen Leiters enthält, gemäß der Erfindung den Windungen zumindest einer Spule jeweils spannungsabhängige Widerstände parallel geschaltet. Man nimmt also eine innere Beschaltung mit spannungsbegrenzenden Widerständen vor, durch deren Parallelschaltung die Spule gegen das Auftreten hoher flüchtiger Spannungen zwischen den Spulenanschlüssen geschützt ist. Die Zeitdauer der elektrischen Stoßbeanspruchung an den Spulen beträgt nur wenige Mikrosekunden. Entsprechend gering ist der Energieinhalt eines solchen Spannungsimpulses. Die stationäre Betriebsspannung von Spulen in Hochspannungswicklungen elektrischer Maschinen oder Apparate beträgt im allgemeinen einige hundert Volt, im Extremfall 1 bis 2 kV, so daß handelsübliche spannungsabhängige Widerstände, d. h. Niederspannungsbauelemente, für die Betriebsspannung einfach oder in zwei- oder mehrfacher Reihenschaltung zu jeder der gefährdeten Spulen einer Wicklung parallel geschaltet werden können. Damit werden die auftretenden Spannungen an den Spulen auf etwa den doppelten bis dreifachen Wert der Nennspannung der spannungsabhängigen Widerstände begrenzt. Eine mit innerer Beschaltung ausgeführte Wicklung ist also hinsichtlich der Isolationskoordination der Windungsisolierung mit definierten Schutzpegeln versehen. Eine äußere Beschaltung mit voluminösen und aufwendigen Hochspannungsschutzkondensatoren ist nicht mehr erforderlich.

Es ist besonders vorteilhaft, als spannungsabhängige Widerstände Metalloxidwiderstände, vorzugsweise Zinkoxidwiderstände zu verwenden. Diese sind in einfacher Form und in ausreichend kleinen Abmessungen erhältlich, so daß die Parallelschaltung vorgenommen werden kann, ohne den Raumbedarf der Spule wesentlich zu vergrößern. Diese als spannungsabhängige Widerstände verwendeten Metalloxidwiderstände zeichnen sich auch durch eine große Betriebssicherheit aus.

Es empfiehlt sich, die Parallelschaltung mit den spannungsabhängigen Widerständen an den besonders durch die Stoßwellen gefährdeten Spulen der Wicklung vorzunehmen, d. h. an den benachbart zu den Klemmen der Maschine oder des Apparates am Wicklungsanfang liegenden Spulen. Die Parallelschaltung kann in einer oder in mehreren Stufen durch einen oder durch mehrere spannungsabhängige Widerstände vorgenommen sein, so daß jeweils alle Windungen der Spule oder jeweils mehrere benachbarte Windungen überbrückt werden. Da die handelsüblichen spannungsabhängigen Widerstände die Form von Scheiben bzw. Platten aufweisen, deren Stirnflächen jeweils die Kontaktflächen bilden, kann die Verbindung der spannungsabhängigen Widerstände zu den Windungen der Spulen in einfachster Weise über gelötete, geschraubte oder gesteckte Anschlußleiter vorgenommen werden. Sind die Spulen von einer festen Hauptisolierung umgeben, so ist es besonders zweckmäßig, diese innere Beschaltung der Spulen mit den spannungsabhängigen Widerständen bereits während der Herstellung vorzunehmen und sie danach von der Hauptisolierung
einschließen zu lassen.

Im folgenden sei die Erfindung noch anhand der in den
Figuren 1 bis 5 der Zeichnung dargestellten Ausführungsbeispiele näher erläutert. Fig. 1 zeigt schematisch,
Fig. 2 perspektivisch den prinzipiellen Aufbau einer mit
einem spannungsabhängigen Widerstand parallel geschalteten Spule. In Fig. 3 ist ein Teilschnitt durch die Windungen einer Spule dargestellt. Fig. 4 zeigt eine Teilansicht auf den Wickelkopf einer elektrischen Maschine.
In Fig. 5 ist ferner schematisch ein Tragkörper mit spannungsabhängigen Widerständen dargestellt.

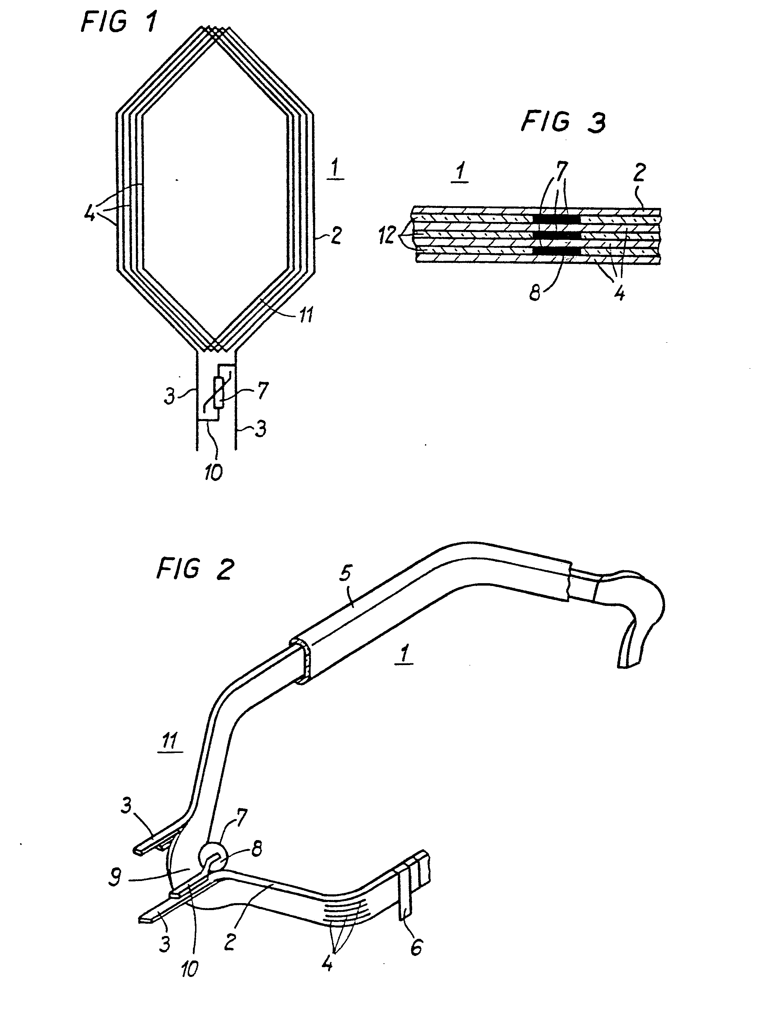

Die Figuren 1 und 2 zeigen eine Spule 1, wie sie bei der
Ständerwicklung eier elektrischen Maschine, z. B. eines
Asynchronmotors, verwendet wird. Die Spule 1 besteht
aus einem Leiter 2 aus rechteckförmigem Profilkupfer, der
mit einer nicht dargestellten Windungsisolierung in Form
eines Lackauftrags oder einer Umbandelung versehen ist.
Die Spule 1 weist zwischen den Anschlußenden 3 fünf Windungen 4 auf. Außerdem ist die gesamte Spule von einer
Hauptisolierung 5 umgeben, die aus einer aus Glimmerbändern 6 durchgehend gewickelten Isolierhülse besteht, die
anschließend mit einem aushärtbaren Kunstharz getränkt
und ausgehärtet ist.

Zum Schutz gegen Stoßspannungen ist den Windungen 4 der
Spule 1 ein spannungsabhängiger Widerstand 7 parallel
geschaltet. Dieser spannungsabhängige Widerstand 7 hat
die Form einer Scheibe, deren Stirnflächen 8 zur Kontaktierung dienen. Der spannungsabhängige Widerstand 7 ist
in der Spulennase 9 angeordret und über Anschlußleiter 10,
die an den Stirnflächen 8 zur Anlage gelangen, mit den
Anschlußenden 3 der Spule 1 verbunden. Der spannungsabhängige Widerstand 7 liegt somit im Bereich des Wickelkopfes 11. Die Hauptisolierung 5 ist hier so ausgebildet,
daß sie den spannungsabhängigen Widerstand 7 einschließt.
Dadurch ist die äußere Form der Spule 1 und somit ihr
Raumbedarf praktisch unverändert geblieben. Eine derartig
mit einem spannungsabhängigen Widerstand 7 innen beschaltete Spule 1 wird mit Vorteil am Anfang der Wicklung,
d. h. jeweils in Nähe der Maschinenklemmen eingesetzt,
weil dort die Spannungsbeanspruchung durch einfließende
Stoßspannungen am höchsten ist. Durch das Ansprechen des
spannungsabhängigen Widerstandes 7 wird die eindringende
Stoßspannung in der Höhe der Ansprechspannung des spannungsabhängigen Widerstandes 7 abgeschnitten und kann somit zu keiner Gefährdung der Windungsisolierung führen.

In Fig. 3 ist eine andere Möglichkeit zur Anordnung der
spannungsabhängigen Widerstände 7 gezeigt. Für gleiche
Teile sind die gleichen Bezugszahlen beibehalten. Die
spannungsabhängigen Widerstände 7 sind hier als dünne
Plättchen zwischen blank belassene Abschnitte benachbarter Windungen 4 des Leiters 2 eingelegt. Ihre Stirnflächen 8 liegen somit in unmittelbarem Kontakt zur blanken
Oberfläche des Leiters 2. Die Windungsisolierung 12 ist
an diesen Stellen unterbrochen. Auch bei dieser Spule 1
umschließt die nicht dargestellte Hauptisolierung sowohl
die Windungen 4 als auch die spannungsabhängigen Widerstände 7.

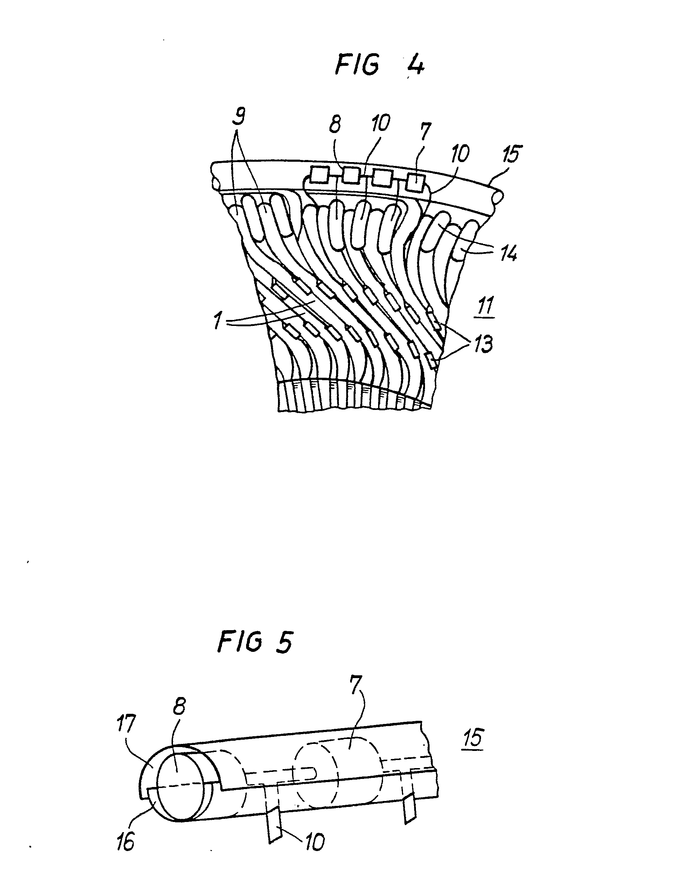

Fig. 4 zeigt einen Teil des Wickelkopfes 11 einer Ständerwicklung einer elektrischen Maschine, die aus Spulen 1
aufgebaut ist. Die Spulen 1 sind gegeneinander durch
Klötze 13 versteift. Zur Verbindung der Spulen 1 untereinander dienen Verbindungsleiter 14, die zwischen den
Spulennasen 9 liegen. Benachbart zu den Spulennasen 9 und
den Verbindungsleitern 14 ist ein ringförmig gestalteter,
isolierter Tragkörper 15 angeordnet, der aus Teilen eines
Ringes bestehen oder auch einen geschlossenen Ring bilden kann. Im Innern dieses Tragkörpers 15 sind die spannungsabhängigen Widerstände 7 jeweils den Spulen 1, denen sie parallel geschaltet werden sollen, gegenüberliegend angeordnet. Die Verbindung zu den Spulen 1 erfolgt über isolierte Anschlußleiter 10, die Kontakt zu den Stirnflächen 8 der spannungsabhängigen Widerstände 7 haben.

Zur Vereinfachung der Montage der spannungsabhängigen Widerstände 7 ist der Tragkörper 15, wie in Fig. 5 gezeigt, aus zwei isolierenden Halbschalen 16 und 17 gebildet. Mit der den Spulennasen 9 zugewandten Halbschale 16 können die Anschlußleiter 10 fest verbunden sein, die nicht dargestellte Federelemente enthalten, damit ein sicherer Kontakt mit den Stirnflächen 8 der spannungsabhängigen Widerstände 7 erhalten wird. Über die Halbschale 16 wird dann nach dem Einlegen der spannungsabhängigen Widerstände 7 die andere Halbschale 17 geschoben und somit der Tragkörper 15 geschlossen. Die Befestigung des Tragkörpers 15 am Wickelkopf 11 erfolgt in beliebiger geeigneter Weise.

5 Figuren
8 Ansprüche

Patentansprüche

1. Wicklung für elektrische Maschinen oder Apparate, die mehrere Spulen aus konzentrischen, gegeneinander isolierten Windungen eines elektrischen Leiters enthält, d a - d u r c h   g e k e n n z e i c h n e t ,   daß den Windungen (4) zumindest einer Spule (1) jeweils spannungsabhängige Widerstände (7) parallel geschaltet sind.

2. Wicklung nach Anspruch 1, d a d u r c h   g e - k e n n z e i c h n e t ,   daß die Spulen (1) mit parallel geschalteten spannungsabhängigen Widerständen (7) in Klemmennähe am Wicklungsanfang liegen.

3. Wicklung nach Anspruch 1 oder 2, d a d u r c h g e k e n n z e i c h n e t ,   daß als spannungsabhängige Widerstände (7) Metalloxidwiderstände verwendet sind.

4. Wicklung nach Anspruch 1 oder 2, bei welcher die Spulen von einer festen Hauptisolierung umgeben sind, d a d u r c h   g e k e n n z e i c h n e t ,   daß die spannungsabhängigen Widerstände (7) von der Hauptisolierung (5) eingeschlossen sind.

5. Wicklung nach Anspruch 1 oder 2 für eine elektrische Maschine, d a d u r c h   g e k e n n z e i c h n e t , daß die spannungsabhängigen Widerstände (7) im Bereich des Wickelkopfes (11) liegen.

6. Wicklung nach Anspruch 5, d a d u r c h   g e - k e n n z e i c h n e t ,   daß die spannungsabhängigen Widerstände (7) in einem isolierten Tragkörper (15) den mit ihnen verbundenen Spulen (1) gegenüberliegend angeordnet sind.

7. Wicklung nach Anspruch 6, d a d u r c h g e - k e n n z e i c h n e t , daß der Tragkörper (15) ringförmig gestaltet ist.

8. Wicklung nach Anspruch 6 oder 7, d a d u r c h g e k e n n z e i c h n e t , daß der Tragkörper (15) aus zwei übereinanderschiebbaren isolierenden Halbschalen (16, 17) besteht.

FIG 1

4

1

2

11

3

7

3

10

FIG 3

1    7    2

12

8    4

FIG 2

5

1

11

3

7

8

9

3

2

10    4    6

FIG 4

FIG 5

Europäisches
Patentamt

EUROPÄISCHER RECHERCHENBERICHT

**0050091**
Nummer der Anmeldung

EP 81730099.9

| EINSCHLÄGIGE DOKUMENTE | | | KLASS-FIKATION DER ANMELDUNG (Int. Cl.) |
|---|---|---|---|
| Kategorie | Kennzeichnung des Dokuments mit Angabe, soweit erforderlich, der maßgeblichen Teile | betrifft Anspruch | |
| | US - A - 3 488 538 (HAYASHI)<br><br>* Fig. 10 *<br><br>-- | 1 | H 02 K 3/00<br>H 02 K 11/00<br>H 01 F 27/40<br>H 02 H 9/06 |
| | DE - B2 - 2 357 127 (MITSUBISHI)<br><br>* Fig. 3; Spalte 2, Zeile 23 - Spalte 3, Zeile 59 *<br><br>-- | 1,3 | |
| | DE - A1 - 2 242 528 (GENERAL ELECTRIC)<br><br>* Fig. 8; Seite 5, Zeile 8 - Seite 6, Zeile 18; Seite 14, Zeile 19 - Seite 16, Zeile 8 *<br><br>-- | 1,3 | |
| | GB - A - 1 574 229 (MATSUSHITA)<br><br>* Fig. 1; Seite 1, Zeilen 10-15, 59-76 *<br><br>---- | 1 | RECHERCHIERTE SACHGEBIETE (Int. Cl.)<br><br>H 02 K 3/00<br>H 02 K 11/00<br>H 02 K 13/00<br>H 01 F 15/00<br>H 01 F 27/00<br>H 02 H 9/00<br>H 02 H 7/00 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| WIEN | 23-12-1981 | KUTZELNIGG |